# FASCICULE DE BREVET EUROPEEN

(11) **EP 0 796 987 B1**
(45) Date de publication et mention de la délivrance du brevet: **19.07.2000**
(21) Numéro de dépôt: 97400621.5
(22) Date de dépôt: 20.03.1997
(51) Int. Cl.: F02C 7/22, F02M 37/22, B01D 29/11

(54) **Circuit d'alimentation en carburant permettant la décontamination du débit dosé injecté**
Brennstoffzufuhrsystem zur Dekontamination der Einspritzdosierungsrate
Fuel supply system for the decontamination of the injection dose rate

(30) Priorité: 21.03.1996 FR 9603498
(43) Date de publication de la demande: 24.09.1997
(73) Titulaire: Snecma Moteurs, 75015 Paris (FR)
(72) Inventeur: Halin, Yves Robert, 91250 - Saint Germain les Corbeil (FR)
(74) Mandataire: Berrou, Paul

(56) Documents cités:
- EP-A- 0 122 439
- EP-A- 0 307 264
- FR-A- 2 580 190

## Description

L'invention concerne un circuit d'alimentation en carburant permettant la décontamination du débit dosé injecté.
Elle s'applique notamment dans le domaine de l'aéronautique à la protection d'un circuit de dosage et d'injection de carburant d'une turbomachine.

Dans de nombreux dispositifs utilisant des liquides sous pression élevée, il faut que le liquide soit parfaitement filtré pour éviter l'usure provoquée par ses contaminants. Il est courant de satisfaire à cette condition au moyen d'une cartouche filtrante qui peut être remplacée lorsqu'elle est colmatée. Il est aussi courant de monter une soupape de dérivation qui permet de faire circuler le liquide en évitant une cartouche colmatée. L'état du filtre doit être contrôlé régulièrement de manière à éviter une détérioration rapide des appareils coûteux que le filtre est destiné à protéger.

Dans le cas particulier d'un système d'alimentation et de dosage du carburant d'une turbomachine comportant généralement une pompe à engrenages, par exemple de type volumétrique, un dispositif de dosage de débit et des injecteurs de carburant, il est nécessaire de protéger ce système d'une contamination externe provenant des réservoirs de carburant et de protéger le dispositif de dosage et les injecteurs de la contamination due à des particules d'usure produites par la pompe, voire à une dégradation de la pompe (voir EP-A-0 307 264). Cependant cette double protection ne peut pas être obtenue en utilisant un seul filtre. Par ailleurs, l'utilisation de deux filtres placés respectivement en amont et en aval de la pompe entraîne des difficultés d'installation, une augmentation de la masse du moteur, des opérations de maintenance supplémentaires et une difficulté fonctionnelle due aux fortes pressions en aval de la pompe. Par ailleurs ces systèmes introduisent des pertes de charge non négligeables qui augmentent en fonction du degré de colmatage du filtre.
Le but de l'invention est de réaliser un circuit d'alimentation en carburant permettant la décontamination du débit dosé injecté de façon efficace et ne nécessitant pas de surveillance ni de maintenance supplémentaire. Pour cela l'invention consiste à disposer un filtre principal unique entre des pompes basse pression et haute pression et à définir une architecture du circuit de carburant qui permet de canaliser la contamination du carburant, quelle que soit son origine, vers le filtre principal, afin de garantir la fiabilité de la pompe. La contamination recirculée au travers du filtre principal n'atteindra donc pas le circuit de dosage et d'injection de carburant. La contamination du carburant est canalisée par l'intermédiaire d'un filtre auto-lavable équipé d'une cartouche filtrante disposée parallèlement à l'écoulement du débit de carburant provenant de la pompe haute pression.

Un dispositif de dosage de carburant est alimenté au travers de la cartouche filtrante du filtre auto-lavable par une partie de carburant prélevée perpendiculairement à l'écoulement du carburant. La partie du carburant non prélevée traverse le centre du filtre auto-lavable puis est canalisée par l'intermédiaire d'une soupape régulatrice en amont du filtre principal. Par l'effet dynamique de séparation des particules dans le filtre autolavable, les particules polluantes sont canalisées au centre du filtre auto-lavable et n'atteignent jamais le dispositif de dosage de carburant, ni les injecteurs situés en sortie de ce dispositif de dosage.
Le filtre auto-lavable présente l'avantage de ne nécessiter aucune surveillance particulière, ni aucune maintenance. C'est le débit permanent du carburant au centre du filtre auto-lavable qui entraîne les particules polluantes en aval.

Selon l'invention, le circuit d'alimentation en carburant permettant la décontamination du débit dosé injecté comportant un filtre principal disposé dans un écoulement de débit de carburant entre des pompes basse pression et haute pression, un dispositif de dosage de carburant relié à des injecteurs de carburant est caractérisé en ce qu'il comporte en outre un filtre auto-lavable disposé en aval de la pompe haute pression, le filtre auto-lavable comportant une cartouche filtrante disposée parallèlement à l'écoulement du débit carburant, et en ce que le dispositif de dosage de carburant est alimenté par une première partie de carburant prélevée au niveau du filtre auto-lavable perpendiculairement à l'écoulement du débit de carburant.
D'autres particularités et avantages de l'invention apparaîtront clairement dans la suite de la description donnée à titre d'exemple non limitatif et faite en regard des figures annexées qui représentent :
- la figure 1, un schéma simplifié d'un circuit d'alimentation en carburant, selon l'invention ;
- la figure 2, deux courbes schématiques montrant l'évolution du débit de carburant au niveau des injecteurs et du débit de carburant recirculé, en fonction du régime de fonctionnement d'un turboréacteur.

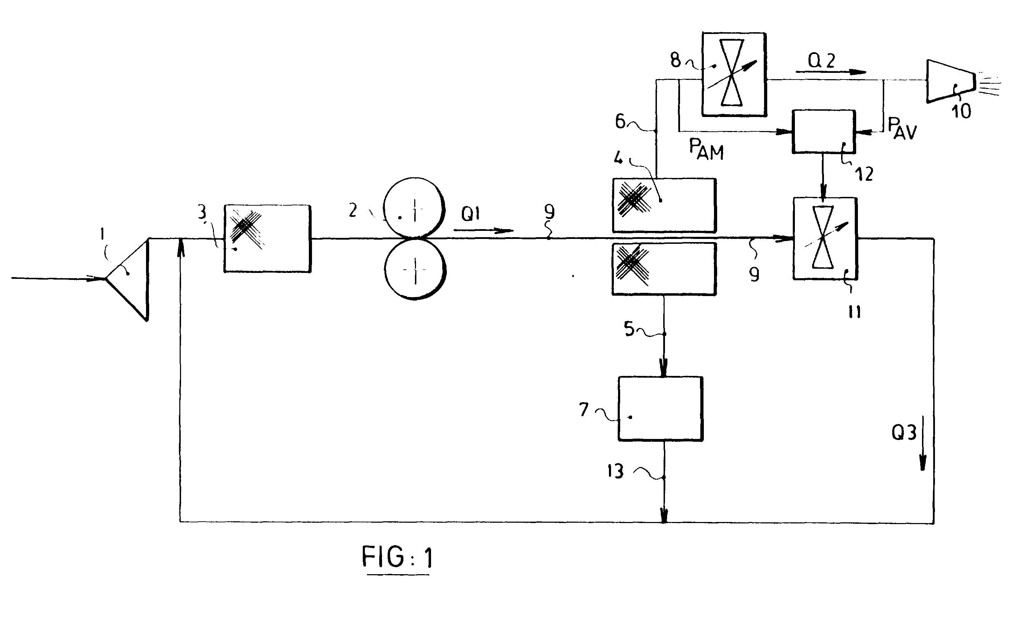

Comme représenté sur la figure 1, le circuit d'alimentation en carburant comporte une pompe basse pression 1 qui reçoit du carburant d'une pompe de gavage non représentée située dans un réservoir de carburant. Ce débit de carburant est envoyé à une pompe haute pression 2 au travers d'un filtre principal 3 situé en amont.
En aval de la pompe haute pression, le débit de carburant Q1 traverse un filtre auto-lavable 4 au niveau duquel sont effectués des prélèvements 5,6 de débit de carburant pour d'une part, alimenter des servo-mécanismes appartenant au système de régulation du moteur et d'autre part, alimenter un dispositif de dosage de carburant 8 en sortie duquel le débit de carburant dosé Q2 est dirigé vers des injecteurs de carburant 10. En sortie des servomécanismes 7, le débit de carburant de retour 13 est dirigé vers l'amont du filtre principal 3. Le filtre auto-lavable 4 comporte une cartouche filtrante disposée parallèlement à l'écoulement 9 du débit de carburant provenant de la pompe haute pression.

Les prélèvements 5,6 de débit de carburant dans le filtre auto-lavable 4 sont effectués perpendiculairement à l'écoulement 9 du carburant, et traversent la cartouche filtrante, ce qui permet d'exploiter l'effet dynamique de séparation des particules dans le filtre auto-lavable 4 et d'alimenter les servomécanismes 7 et le dispositif de dosage 8 par du carburant propre.
La partie du carburant 9, non prélevée, traverse le centre du filtre auto-lavable puis est réinjectée en amont du filtre principal 3 par l'intermédiaire d'une soupape régulatrice 11 placée entre la sortie du filtre auto-lavable 4 et l'entrée du filtre principal 3. L'ouverture de la soupape régulatrice 11 est commandée par un détecteur de différence de pression 12 branché en parallèle avec le dispositif de dosage 8. La commande délivrée par le détecteur de différence de pression 12 est élaborée de manière à maintenir constante la différence de pression PAV-PAM aux bornes du dispositif de dosage 8.
Le diamètre d'ouverture de la soupape régulatrice 11 fixe la valeur du débit dosé Q2 et la valeur du débit excédentaire Q3 réinjecté en amont du filtre principal 3.
Au niveau du filtre auto-lavable 4, le débit permanent Q3 du carburant, non prélevé et traversant le centre de ce filtre 4, élimine les particules polluantes piégées à l'intérieur de la cartouche filtrante du filtre auto-lavable et les entraîne en aval de ce filtre 4 vers la soupape régulatrice 11. Ce filtre 4 ne nécessite donc aucune maintenance ni aucune surveillance particulière. En sortie de la soupape régulatrice 11, ce débit de carburant Q3 éventuellement pollué par des particules provenant de l'usure de la pompe haute pression 2 retourne à l'amont du filtre principal 3. Les particules polluantes n'atteignent donc jamais le dispositif de dosage 8, ni les injecteurs de carburant 10. La disposition particulière du filtre auto-lavable 4 dans le circuit de distribution du carburant permet d'éviter la dégradation des équipements dans 5 le cas d'une éventuelle contamination interne par des particules métalliques provenant, par exemple, d'une détérioration de la pompe haute pression 2.

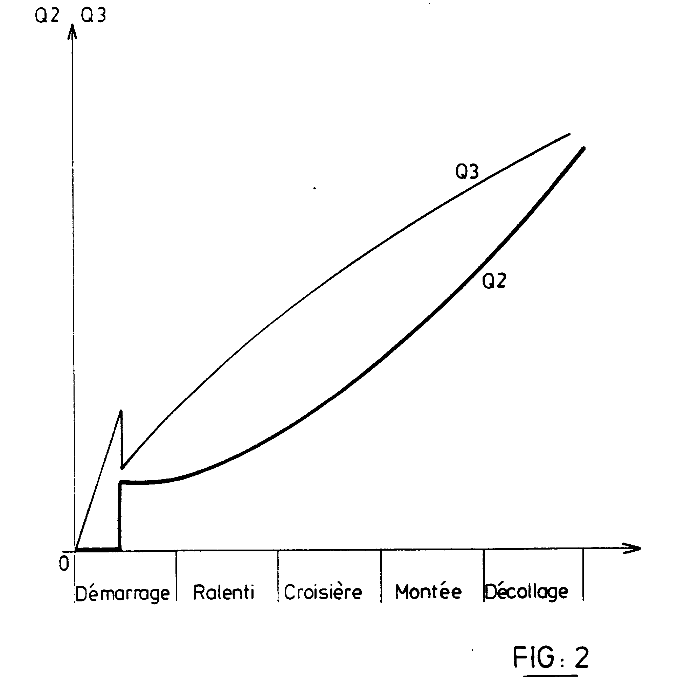

Pour que l'auto-lavage du filtre 4 soit réalisé de façon efficace, il est nécessaire que le débit de carburant Q3 qui traverse le centre du filtre 4 soit toujours au moins égal au débit de carburant dosé Q2.
Cette condition est toujours réalisée comme le montre la figure 2 qui représente les courbes de variation des débits de carburant Q2 et Q3 au cours d'un cycle moteur type en fonction du régime de fonctionnement d'un turboréacteur.

Dans un turboréacteur, la pompe haute pression 2 est dimensionnée pour le point de fonctionnement correspondant au redémarrage du moteur en vol, c'est à dire pour une faible vitesse de rotation de la pompe. La pompe est surdimensionnée pour les autres régimes de fonctionnement du moteur.

La vitesse de rotation de la pompe étant beaucoup plus élevée pour tous les autres régimes de fonctionnement du moteur, le débit de carburant est plus important et la condition d'un débit de carburant Q3 qui traverse le centre du filtre auto-lavable 4 supérieur au débit de carburant dosé Q2 est toujours réalisée.

## Revendications

1. Circuit d'alimentation en carburant permettant la décontamination du débit dosé injecté comportant un filtre principal disposé dans un écoulement de débit Q1 de carburant entre des pompes basse pression et haute pression, un dispositif de dosage de carburant relié à des injecteurs de carburant, caractérisé en ce qu'il comporte en outre un filtre auto-lavable (4) disposé en aval de la pompe haute pression (2), le filtre auto-lavable (4) comportant une cartouche filtrante disposée parallèlement à l'écoulement (9) du débit Q1 de carburant, en ce que le dispositif de dosage de carburant (8) est alimenté par une première partie de carburant (6) prélevée au niveau du filtre auto-lavable (4) perpendiculairement à l'écoulement (9) du débit Q1 de carburant et en ce qu'une deuxième partie de débit Q3 de carburant non prélevée traverse le centre du filtre auto-lavable (4) puis est réinjectée en amont du filtre principal (3) par l'intermédiaire d'une soupape régulatrice (11).

2. Circuit d'alimentation en carburant selon la revendication 1, caractérisé en ce que la soupape régulatrice (11) est commandée par un détecteur de différence de pression (12) branché en parallèle avec le dispositif de dosage (8).

## Patentansprüche

1. Brennstoffzuführsystem zur Dekontamination der dosierten Einspritzmenge mit einem Hauptfilter, der in einer Strömungsbahn der Brennstoffmenge Q1 zwischen Nider- und Hochdruckpumpen angeordnet ist, und einer Brennstoffdosiervorrichtung, die mit den Brennstoffeinspritzdüsen verbunden ist,
**dadurch gekennzeichnet,**
daß es ferner einem selbstreinigenden Filter (4) aufweist, der in Stromrichtung hinter der Hochdruckpumpe (2) angeordnet ist, wobei der selbstreinigende Filter (4) einen Filtereinsatz aufweist, der parallel zur Strömungsbahn (9) der Brennstoffmenge Q1 angeordnet ist, daß die Brennstoffdosiervorrichtung (8) mit einem ersten Teil Brennstoff (6) gespeist wird, der in Höhe des selbstreinigenden Filters (4) im rechten Winkel zur Strömungsbahn (9) der Brennstoffmenge Q1 entnommen wird und daß eine zweite, nicht entnommene Brennstoffmenge Q3 durch die Mitte des selbstreinigenden Filters (4) stömt und dann mittels eines Regelventils (11) in Stromrichtung vor dem Hauptfilter (3) eingespritzt wird.

2. Brennstoffzuführsystem nach Anspruch 1, **dadurch gekennzeichnet, daß** das Regelventil (11) durch einem Druckdifferenzfühler (12) gesteuert wird, der mit der Brennstoffdosiervorrichtung (8) parallel geschaltet ist.

## Claims

1. Fuel supply circuit for decontaminating the injected metered delivery, including a main filter arranged in a fuel delivery flow Q1 between low-pressure and high-pressure pumps and a fuel-metering device connected to fuel injectors, characterized in that it further includes a self-washing filter (4) arranged downstream of the high-pressure pump (2), the self-washing filter (4) including a filter cartridge arranged parallel to the flow (9) of the fuel delivery Q1, in that the fuel-metering device (8) is supplied with a first proportion of fuel (6) tapped from the self-washing filter (4) at right angles to the flow (9) of the fuel delivery Q1 and in that a second, untapped, proportion of fuel delivery Q3 passes through the centre of the self-washing filter (4) and is then reinjected upstream of the main filter (3) by means of a regulating valve (11).

2. Fuel supply circuit according to Claim 1, characterized in that the regulating valve (11) is controlled by a pressure-difference detector (12) connected in parallel across the metering device (8).
